# EUROPEAN PATENT SPECIFICATION

(11) **EP 1 200 658 B1**
(45) Date of publication and mention of the grant of the patent: **02.05.2007**
(21) Application number: 00949757.9
(22) Date of filing: 04.08.2000
(51) Int. Cl.: D04B 21/04

(54) **IMPROVEMENTS IN OR RELATING TO SPACER FABRICS**
VERBESSERUNGEN AN ODER IN BEZUG AUF ABSTANDSSTOFFE
PERFECTIONNEMENT DES TISSUS D'ECARTEMENT

(30) Priority: 04.08.1999 GB 9918334
(43) Date of publication of application: 02.05.2002
(73) Proprietor: MOTHERCARE UK LIMITED, Watford Herts WD2 5SH (GB); JOHN HEATHCOAT & COMPANY LIMITED, Westexe Tiverton Devon EX16 5LL (GB); Relyon Limited, Wellington Somerset TA21 8NN (GB)
(72) Inventor: ANSON, John Campbell, Watford, Herts WD2 5ES (GB); WATTERSON, Brian, Cullompton, Devon EX15 1NG (GB); MARKE, Richard, Wellington, Somerset TA21 9AR (GB)
(74) Representative: Hall, Robert Leonard
(86) International application number: PCT/GB2000/002959
(87) International publication number: WO 2001/011128

(56) References cited:
- EP-A- 0 617 152
- WO-A-95/12018
- WO-A-96/32526
- DE-A- 4 336 303
- DE-C- 19 635 170
- US-A- 5 817 391
- MELLIAND TEXTILBERICHTE, no. 6/1998, 1998, pages 415-418,
- MELLIAND TEXTILBERICHTE, no. 10/1993, 1993, pages 993-997,
- ANONYMOUS: "LLBean: Women's Snowsport Gore-Tex Primaloft Glove" INTERNET ARTICLE, [Online] Retrieved from the Internet: URL:www.bobvila.com> [retrieved on 2004-11-23]

## Description

This invention relates to spacer fabrics and more particularly to a novel spacer fabric and a mattress cover and composite mattress construction produced therefrom.

Spacer fabrics have opposite face structures united and held in spaced disposition by linking spacing threads. Many applications of spacer fabrics are known, for example, from GB2042003, which describes a liquid absorbing textile product, WO95/16416, which describes a compression bandage, WO95/12018, which describes clothing articles, US5896758, which describes a fabric for footwear and backpacks, WO99/05990, which describes a prosthetic fabric, WO96/01602, which describes a mat, and US5834382, which describes a high temperature resistant covering.

In UK Patent No.GB2305191B there is described and claimed a flexible spacer material, which comprises a fabric, providing a liquid permeable and breathable upper surface and a heat and liquid dissipating spacer layer, and a liquid impermeable lower surface layer. The spacer material is used for the production of mattress covers, and more particularly for cot mattresses for babies and young children. These are sold under the name SLEEPRIGHT (RTM) cot mattress by Mothercare Limited.

Whilst cot mattresses produced using the spacer materials described in GB2305191B have vastly improved properties over conventional cot mattresses and the product has proved to be commercially extremely successful, certain improvements in the breathability and airflow properties of the spacer fabric would be very desirable, together with improved work of compression, thickness recovery and compression recovery properties.

Improved breathability obviously gives an improved safety factor for the cot mattress, and improved air flow reduces the risk of over-heating, thereby leading to even greater comfort for the infant.

Improved work of compression, thickness recovery and compression recovery properties give greater softness and resilience to the cot mattress.

In our co-pending UK application no. GB2353048 there is described and claimed a flexible spacer fabric, the fabric having a liquid permeable and breathable upper surface layer, the upper surface layer comprising a knitted mesh wherein the ratio of average hole diameter to average strand width is from 4:1 to 1:2, a heat and liquid dissipating spacer layer, and a dimensionally stable lower surface layer.

Whilst a considerable improvement in some or all of the above mentioned properties, can be obtained by increasing the ratio of hole size to strand size in the upper surface layer as described in co-pending UK application no. GB2353048, this improvement is not without its consequences, and in some circumstances there can be a reduction in the liquid transport properties of the fabric. This can be a disadvantage, since slower liquid transport can result in slower conveyance of body fluids away from the body region, and possible discomfort for the infant.

DE 4336303 describes a double humidity transporting knitted fabric with a spacing between its two webs.

DE-C-19635170 discloses a spacer fabric in which fibres crossing between inner and outer layers have a wicking construction to enhance transport of moisture between the layers.

It has now been found that the aforementioned disadvantages can be overcome or at least obviated by using inherently wicking fibres in the manufacture of the upper surface layer.

In a first aspect, the invention provides a flexible spacer fabric as defined in claim 1.

In a further aspect, the invention provides a mattress cover material which comprises a flexible spacer fabric according to the invention and a liquid impermeable lower surface layer.

In another aspect the invention provides a cot mattress comprising a foam plastics core or a spring mattress core and a cover comprising a flexible spacer fabric according to the invention and a liquid impermeable lower surface layer.

In a still further aspect, the invention provides a cot mattress comprising a foam plastics core or a spring mattress core, a cover comprising a flexible spacer fabric according to the invention, and, arranged between the mattress core and the cover, a liquid impermeable layer.

The upper surface layer is preferably such that liquids and air can easily pass there through and into the spacer layer and the spacer fabric is preferably such that it has an enhanced ability to conduct liquid away from the surface and dissipate it through the fabric structure, and such that it permits passage of air through the structure.

The upper surface layer is a warp knitted mesh, having holes of a size such that liquids can pass therethrough. Preferably the holes are hexagonal, so that the upper surface layer has the appearance of a honeycomb.

The mesh hole size of the upper surface layer is preferably as large as possible for drainage and ventilation purposes, but should not be so large as to cause discomfort when placed next to the skin. A mesh average hole diameter of from 1 to 3mm, preferably around 2mm has been found to give particularly good results.

The average width of the mesh strands in the upper surface layer is preferably from 0.1 to 4 mm, more preferably from 0.5 to 3mm, such as, for example, about 2 mm.

Preferably the ratio of the average hole diameter to the average width of the mesh strands in the upper surface layer is from 3:1 to 1:2, for example 1:1.

Preferably the upper surface layer of the spacer fabric is such that liquids of viscosity of at least 20 dynes per centimetre and more preferably of at least 30 dynes per centimetre can pass through the upper surface and into the spacer layer without lying on the surface. Preferably the upper surface of the spacer fabric has a grade of less than 1 when tested in accordance with the Oil Repellency Rating AATCC method.

The breathability of the upper surface layer is preferably such that, when placed face down on the fabric, a baby can continue to breath relatively normally.

The air permeability test providing a measure of the breathability of a fabric, i.e. the ease with which air passes through the fabric structure, is BS 4578:1970 (1991) Measurement of Restriction of Airflow. Preferably the spacer fabric has a value of less than 5mm H₂O, more preferably less than 2.0mm H₂O, most preferably less than 1mm H₂O, when tested in accordance with BS 4578:1970 (1991).

In the fabric of the invention the upper surface layer comprises inherently wicking fibres. In this specification the term "inherently wicking fibre" means a monofilament fibre which, by virtue of its shape and configuration, has inherent wicking properties, whereby liquid can be transported along the fibre by capillary action. By "inherent" is meant enhanced, when compared with a fibre of the same material having a round cross section and similar dTex.

Whilst the spacer fabric of GB2305191B undoubtedly has excellent wicking properties, the upper surface layer is not stated to have any special wicking properties independent of the total fabric structure.

The upper surface layer comprises a warp knitted mesh of multifilament yarns.

Wicking fibres for use in the upper surface layer are contained in multifilament synthetic fibre yarns sold for their inherent wickability. Such fibres have enhanced capillary action by virtue of their shape and configuration. The enhanced wicking properties of inherently wicking fibres can be achieved, for example, by various different fibre cross-sectional structures, providing at least one longitudinal channel which permits faster liquid transport by capillary action. All inherently wicking fibres will have a capability of wicking at a greater rate than conventional multifilament yarns of similar dTex. They can, for example, have a complex cross-section which provides a plurality of longitudinal channels to conduct liquid along the fibre at a rate greater than a comparable conventional fibre with a circular cross-section. Fabrics knitted from yarns of inherently wicking fibres can have a drying rate of up to 20%, more preferably 30% and most preferably 50% faster than cotton, and up to 5%, and more preferably 10%, faster than conventional synthetic fibres.

Preferably a fabric made from an inherently wicking fibre has a moisture loss of at least 5%, more preferably at least 10%, greater than a fabric made from a conventional synthetic fibre having a circular cross-section after 30 minutes.

Suitable synthetic fibre yarns include polyesters and polyamides, although polyesters are preferred, due to their greater heat stability. Preferred multi-filament yarns have a dTex of from 40 to 340, more preferably from 40 to 180. An example of a suitable wicking fibre is CoolMax^{™}, which is a four channel Dacron^{™} polyester fibre with a special cross-sectional structure comprising three intersecting circles manufactured by Du Pont. Another potentially suitable wicking fibre is CoolMax Alta^{™}, also manufactured by Du Pont.

In addition to its inherent wicking properties, the upper surface layer can also aid liquid transport by allowing liquids to pass through itself into the spacer layer.

In certain embodiments of the invention, at least the upper surface layer of the spacer fabric can also comprise an anti-bacterial yarn which is preferably of the type which also retards the growth of mould, mildew and fungus. Incorporation of an inlay of the anti-bacterial yarn can provide a safer and more hygenic spacer fabric. Other inlays which can be used include, for example, thermoregulating fibres.

The linking threads of the spacer layer preferably comprise a mono-filament which traverses back and forth between the upper and lower surfaces. It has been found that, by omitting multi-filament linker threads from the spacer layer, the air volume of the spacer layer can be increased, providing improved air permeability and heat dissipation. Omitting multi-filament linker threads makes possible for example, a 50% reduction in the number of threads linking across the spacer layer, compared to the current commercially available product. In a preferred spacer fabric of the invention, the number of mono-filament linker threads in the spacer layer is preferably from 100 to 400 threads per square centimetre, for example about 286 threads per square centimetre.

Whilst the mono-filament linking threads in the spacer layer can be individually spaced apart and perpendicularly arranged with respect to the upper and lower surface layers, they are preferably arranged such that each pair, or group, of threads is in the form of a V-shape, when the fabric is viewed in cross-section, with the angle of the V preferably being from 5⁰ to 55⁰, for example about 27⁰ to about 32⁰. The V-shaped pairs or groups of threads can form a zig-zag pattern, and each individual thread can have a horizontal midsection which is inlaid into the upper surface layer.

Preferably at least 50% and more preferably 100% of the linking threads are arranged in V-shaped formations.

By arranging for pairs or groups of threads linking the upper and lower surfaces to lie at opposed angles to the perpendicular distance between the upper and lower surfaces, it is possible to improve the resistance of the spacer fabric to "flopping over" when subjected to a compressive force. This "flopping over" is highly undesirable since it can result in the complete flattening of the spacer fabric and a loss of the spacer layer with its properties of breathability and heat dissipation. As the linking threads are angled in alternate directions the spacer fabric can achieve a comfortable resilient feel whilst still retaining breathability, heat dissipation and a resistance to crushing. The inlaid midsection also helps to spread the load of the mono-filament thread on the upper surface layer.

The linking threads preferably have a sufficient stiffness to resist complete crushing of the fabric by the distributed weight of the baby, and yet have sufficient resilience to impart a springiness or "give" to the fabric for comfort. Preferred mono-filaments for use as linking threads have a dTex of from 22 to 115, and can be made, for example, from a polyamide such as Nylon, a polypropylene, or most preferably a polyester.

Preferably the spacer fabric of the invention is such that the spacer layer requires a work of compression, as measured by BS 4098:1975 of at least 50 J/metre², preferably at least 60 J/metre², with a maximum of around 350J/m² and a thickness recovery of at least 50%, preferably at least 75%, and a compression recovery of at least 65% preferably at least 75%.

Preferably the spacer fabric of the invention is such that in the spacer layer the ratio of the volume of free space to the volume of linker threads is greater than 40, preferably greater than 100.

In preferred embodiments of the invention, the upper surface layer has a construction wherein the mono-filament linker threads of the spacer layer are effectively surrounded by softer multi-filament yarns in order to give a softer surface feel. This construction can be achieved, for example, using a Liba-DPLM machine, and a combination of closed and open stitches relative to the different yarns and threads. Preferably an open stitch is applied to the surface multi-filament yarns, and a closed stitch to the mono-filament linker threads.

Surrounding the mono-filament linker threads with multi-filament yarns in the upper surface layer spreads the point of load of each mono-filament linker thread over a larger area and imparts greater resilience and improved compression anti-fatigue characteristics to the fabric.

In preferred spacer fabrics according to the invention the surface mesh is fully supported by the mono-filament linker threads.

The dimensionally stable lower surface layer of the spacer fabric of the invention is preferably knitted with stitches having a plurality of loops, which can be achieved, for example, by using two guide bars instead of one, and using a Liba-DPL machine. The number of stitches is reflected in the gauge of the knitting machine used, and preferably the machine has a gauge of at least 16 and preferably 16, 22, 24 or 28. By "dimensionally stable" is meant that the lower surface layer retains its integrity even after washing and crumpling.

In certain embodiments of the invention, the lower surface of the spacer fabric is provided with a liquid impermeable layer which can be obtained, for example, by direct coating of the lower surface of the fabric with a liquid-impermeable polymeric material, by impregnation of a liquid-impermeable polymeric material, or by transfer coating, or laminating a film of liquid-impermeable polymeric material thereto, to provide a tightly adherent, liquid-impermeable, backing layer or impregnated layer.

Preferably the liquid-impermeable layer is provided by laminating a flexible backing layer of a suitable polymeric material, for example a polyurethane film, to the lower surface of the fabric by means of an adhesive. The layer of polymeric material is preferably from 10 to 30 microns in thickness, and good results and good flexibility have been achieved using a 25 micron thick polyurethane layer. Other polymeric film materials, such as, for example, polyethylene and polyvinylchloride may also be used in appropriate circumstances.

Where an adhesive is used for laminating, this may be solvent or heat activated, or cold-cured but the amount of heat and pressure used in the lamination process must neither be sufficient to compress the resultant laminate unduly, nor to cause permanent damage thereto. Preferably the adhesive, when set, forms a flexible film in order to prevent crumpling and flexing of the material without cracking of the film.

The backing layer is considered to be water impermeable if it achieves a pass as waterproof when tested in accordance with BS EN 20811:1992.

The backing layer is preferably such that it can be repeatedly machine washed and dried in a tumble dryer without undue shrinkage or permanent damage thereto.

The lower surface layer of the spacer fabric is preferably a multi-filament or spun-filament warp knitted fabric, and, for example, there may be used a multi-filament yarn having a dTex of from 40 to 230, for example, about 78 dTEX. Polyamide or polyester yarns are examples of suitable multifilament yarns which can be used, although polyester yarns are preferred.

The spacer fabric as a whole should of course have a high wickability, which is defined as the ability of the fabric to conduct liquid away from the area of initial contact and form a relatively thin liquid film within the fabric structure. Wickability of the fabric as a whole is measured in accordance with TTM 1428:92 (FDC.348) by suspending test specimens from spring clips vertically over a beaker of distilled water containing a suitable dye and measuring the height to which the liquid rises in a given time. Preferably the spacer fabric is such that the wicked liquid rises to a height of at least 50mm, preferably at least 100mm, when tested in both the warp and weft directions, in a time of 30 minutes. Prior to testing the specimens are conditioned for a minimum of 16 hours in a standard atmosphere of 20°C/65% Relative Humidity ±2%.

The ability of the spacer fabric to take liquid away from its surface and dissipate it through the fabric structure is measured using a water dispersion test in which a solution containing a suitable dye is used to measure the spread of liquid into and through the fabric. In this test, a measured amount of liquid (0.5ml) is applied to the fabric upper surface. The dimensions of the area stained due to the spread of liquid are measured over time. In a preferred spacer fabric in accordance with the invention the dimensions of the spread of water containing dye are at least 5.5cm by 2.5cm and the spread of liquid reaches near equilibrium in about 15 minutes.

The fabric preferably has good heat dissipation, such that it can dissipate heat rapidly away from a hot body. Preferably the fabric is such that the temperature of the fabric when placed under a hot plate with an initial temperature of 34°C does not exceed 25°C and more preferably 22°C after 10 minutes.

In certain preferred constructions according to the invention, where the liquid impermeable layer is not laminated to the spacer fabric, it is found that the spacer fabric makes less noise when its surface is rubbed softly, thereby improving the comfort of a cot mattress produced therefrom by reducing rustling.

Also, in the preferred embodiments, improved bounce and resilience of the spacer fabric can be obtained by the omission of multi-filament linker threads from the spacer layer, allowing the full properties of the monofilament threads to be utilised.

In one embodiment according to the present invention, a cot mattress can be formed by providing a mattress core, a mattress cover comprising a spacer fabric according to the invention, and a liquid impermeable layer therebetween. For example, a mattress core, which can be either a foam plastics core or a sprung interior mattress core, can be provided with a liquid impermeable waterproof underlay, and the spacer fabric of the invention can be formed into a removable mattress cover therefor. An advantage of this construction is that the spacer fabric without the waterproof laminated layer is likely to be more resistant to creasing and distortion when washed at high temperatures. In this embodiment the mattress core is preferably completely enclosed with a waterproof film layer in order to prevent liquids from reaching the core. Complete enclosure of a foam mattress core, for example, by the use of a water proof plastics underlay, is important, since if the mattress becomes wet it can form depressions which do not recover when dry.

The resistance of a laminated mattress cover according to another aspect of the invention, wherein the cover comprises the spacer fabric and a waterproof plastics backing layer, to distortion and creasing during a 60°c wash, may be improved by cross-linking the plastics layer, either before or after the lamination step. Cross-linking can be carried out by, for example, electron beam irradiation, chemical cross-linking, or other techniques known to the art. In this aspect of the invention, cross-linking of the waterproof backing can be applied to laminated mattress covers according to the present invention, and also to the backing layer of laminated spacer materials produced in accordance with GB2305191B.

Preferred embodiments of spacer fabrics and mattress covers according to the present invention have improved breathability and air flow properties due to the increased ratio of hole size to strand size in the woven mesh of the upper surface layer and have improved air permeability due to the increased air space of the spacer layer. An improvement in softness is also achieved by the stitching technique in which the linking mono-filaments are masked by softer multi-filament yarns to form a softer surface.

The foam plastics core or body of the mattress preferably comprises an open cell polymeric foam material, for example, a foamed polyurethane, and very good results have been obtained using Vitafoam (RTM), a polyurethane foam comprising Melamine as a fire retardant additive.

Preferably the foam plastics core or body is permeable to air, although with certain spacer materials of high breatheability this may not be essential. Perforation of the foam plastics core is not usually required.

Where the spacer fabric is used as a mattress cover or mattress protector, it is preferably removable from the mattress core or body for washing purposes and, for example, the cover material or mattress protector may be a loose cover, or provided with a zip at one or more edge regions to permit such removal.

In order to reduce the manufacturing cost of the cot mattress, it is possible to provide the spacer fabric as the top surface layer only of the mattress, the sides and lower surfaces being made of cheaper standard mattress cover fabric material.

In preferred embodiments of the invention, the mattress achieves a pass under BS Standard 7177 for Resistance to Ignition of Mattresses, Divans and Bed Bases, and BS Standard 1877 Fire Retardancy Test for Mattresses and Bumpers for Childrens' Cots, Perambulators and Similar Domestic Articles and is devoid of fire retardant additives comprising antimony, phosphorus or arsenic.

Spacer fabrics can be knitted, for example, on Raschelmachines with two needle bars. Depending upon the nature of the spacer fabric and its physical requirements, a minimum of four guide bars, and normally four to six or more guide bars, are used. In addition to the requirements set out hereto, the thickness of the yarn used for the spacer threads is influenced by the distance between the upper and lower surfaces, the desired softness of the upper surface and whether the central layer is knitted with one guide bar or with two guide bars knitting in opposition to each other. The manufacturing methods for spacer fabrics are discussed in the brochure "Spacer Fabrics - Manufacturing Methods and Applications" published in 1994 by Karl Mayer Textilmaschinenfabrik GmbH,. In the spacer fabrics of the present invention, the distance between the upper and lower surfaces, that is, the width of the spacer layer, is preferably from 3 to 6 mm, more preferably about 4.5 mm.

Preferred embodiments of a spacer fabric and a cot mattress and mattress cover according to the invention are described in the following Examples:

### EXAMPLE 1

A spacer fabric for a material in accordance with the invention is knitted on a RD6N machine using two needle bars and six guide bars. The sequence of operation is as follows:

| | |
|---|---|
| GUIDE BAR 1 | 5-4-4-4/2-3-3-3/5-4-4-4/3-2-2-2/0-1-1-1/ 3-2-2-2/0-1-1-1/2-3-3-3// |
| GUIDE BAR 2 | 0-1-1-1/3-2-2-2/0-1-1-1/2-3-3-3/5-4-4-4/ 2-3-3-3/5-4-4-4/3-2-2-2// |
| GUIDE BAR 3 | 1-0-2-3// |
| GUIDE BAR 4 | 2-3-1-0// |
| GUIDE BAR 5 | 2-2-2-0/0-0-0-2// |
| GUIDE BAR 6 | 0-0-4-5/5-5-1-0// |

Guide bars 1 and 2 form the top mesh surface. The guide bar movement to form the mesh may be varied to make an oval, hexagonal, diamond, square, round, rectangular etc type mesh as desired.

Guide bars 3 and 4 could have different movements for the linking threads, which could in an alternative manufacturing method use only one instead of two guide bars. It would also be possible to use two half set guide bars in opposition instead of one.

Guide bars 5 and 6 could again have different movements for the production of different fabric backing types.

The construction notation is given in steps of 1 i.e. 0-1-2-3-4, where each number represents a movement (or non-movement of the guide bar over one needle space).
Eg. 0-1 is a movement over one needle.
0-2 is a movement over two needle.

The numbers between the / marks represent the movement with respect to a needle bar or bars.
Eg. 1-0/1-2// will mean the guide bar knitting over both needle bars (to use the linking threads).
1-0-1-1/ will mean the guide bar knitting only on one needle bed, as there is no movement (2-2) on the second needle bar.
In a preferred embodiment, by way of example only, the yarn dTEX (thickness) is as follows:
Bars 1 and 2 - 78 dTEX polyester
Bars 3 and 4 - 33 dTEX polyester
Bar 5 & 6 = 78 dTEX polyester

The resultant spacer fabric has a thickness of 4.5mm, an upper surface mesh hole average diameter of 2mm and an average mesh strand width of 2mm.

The spacer fabric can be slit to 60cm wide and made up into a zip-off cover for a cot mattress. The foam core of the cot mattress is a 10cm thick polyurethane foam material of grade 35M.

All the polyester yarns used in the manufacture of the spacer fabric exemplified, and the polyurethane foam of the mattress core, are chosen to be substantially free of arsenic and antimony, and to contain less than 12 parts per million, preferably to be substantially free, of phosphorus.

A spacer fabric spacer material and mattress produced as described above are subjected to the following tests, with results and conclusions as set out below:

### 1. Air Permeability Test

This is to assess the breathability of the fabric, i.e. the ease with which air passes through the fabric structure.
Test Method: BS 4578:1970 (1991) Measurement of Restriction of Airflow.

The fabric of the invention is compared with a control sample manufactured in accordance with GB2305191B.
The closer the result is to zero the better the airflow through the mattress cover.

The results are as follows:

| | | |
|---|---|---|
| | New Fabric GB2305191B | |
| Upper fabric surface | 0.3mmH₂O | 1.7mmH₂O |

The results indicate that the spacer material mattress cover of the present invention has a significantly higher permeability and thus, improved breathability.

After washing in accordance with BS49236A at 40°C and line drying, the air flow restriction of the spacer material mattress cover of the invention is still very low.

### 2. Liquid Dissipation Tests

These demonstrate the ability of the fabric to take liquid away from the surface and dissipate it through the fabric structure.

The tests are in three parts:

### 2(a) Liquid Flow Test

Liquid flow from the surface of the fabric into the structure of the fabric. Liquids with viscosities of from 27.3 to 31.5 dynes/cm are tested. (Based on Oil Repellency Rating AATCC method).
The closer the grade is to zero, the more liquids are taken into the fabric.

| | |
|---|---|
| Grade - less than 1 | indicates that liquids of all tested viscosities soaked into the fabric structure and proves liquid would not sit on the fabric surface. |

### 2(b) Wicking test (Based on TTM1428:92(FDC.348))

Test specimens are suspended over a beaker of distilled water and the height to which the liquid rises is measured over time.

The fabric is tested, and compared to a control sample of a mattress fabric produced in accordance with GB 2304191B, in both directions of the fabric.

The results are as follows:

| Wicking Rate | GB2305191B | New fabric |
|---|---|---|
| Warp direction 1min | 52.5mm | 34mm |
| Warp direction 5 mins | 95mm | 60mm |
| Warp direction 30 mins | Exceeds clips-17mins | 111 mm |
| Warp direction 1 hr | - | 130mm |
| Weft direction 1min | 47.5mm | 46mm |
| Weft direction 5mins | 72.5 min | 65mm |
| Weft direction 30 mins | 1 x 120 mm | 120mm |
| | 1 x exceeds clips | |
| | -29 mins | |
| Weft direction 1hr | exceeds clips-38mins | exceeds clips |

Whilst the results for the new fabric are slightly inferior to those quoted in GB2305191B, they are comparable, especially in the weft direction, and it can be seen that the presence of wicking fibres in the surface layer substantially compensates for the increase in hole size to strand size.

### 2(c) Water Dispersion Test

A solution containing dye is used to measure the spread of liquid into and through the spacer fabric.
A measured amount (0.5ml) is applied to the fabric surface. The dimensions of the area stained due to the spread of liquid are measured over time.
The fabric is compared with control samples of a woven cotton mattress fabric and p.v.c.
It is found that the spread of liquid in the spacer fabric reaches near equilibrium, i.e. maximum spread, after about 15 minutes.
Both the cotton woven fabric and p.v.c. are found to have zero spread, and water therefore sits on the surface of the fabrics.
Therefore, the spacer fabric is superior in taking liquid away from the surface of the fabric and dissipating it through the fabric structure.

### 3. Fire Retardancy Test

The mattress is tested for fire retardancy to the standard laid down in the Furniture and Furnishing (Fire)(Safety) Regulations 1988. The result is a pass.

### 4. Washability Test

Washability tests are carried out. The suitable care instructions are:
(i) wash as synthetic - maximum temperature 60°C
(ii) no bleach
(iii)no iron
(iv) no dry clean
(v) tumble dry

### 5. Thickness Compression and Recovery Test

Five samples of the fabric of the invention are tested following the procedure described in BS4098:1975 the results averaged and compared with the results obtained in GB2305191B.

| | Sample | GB2305191B |
|---|---|---|
| Original thickness | 4.1mm | |
| Compression | 3.4mm | |
| Work of compression | 63J/m² | 73J/m² |
| Thickness recovery | 82.9% | 72.7% |
| Compression recovery | 79.4% | 64.7% |
| Work recovery | 42.9% | |

The results show that the spacer material has a lower work of compression and an improved thickness recovery and compression recovery after compression.

### 6. Heat Dissipation Test

A rectangular hot plate with an initial temperature of 33.8°C is placed on a mattress cover according to the invention and the temperature build-up of the mattress cover under the hot plate and up to 12 cms distant from the edge of the hot plate measured using two sets of five thermocouples, the individual thermocouples in each set being disposed at intervals of 4 cms apart. A 100% PVC mattress cover is used as a control. Thermocouples 1 and 6 are disposed under the hot plate in the central region thereof and 10cms apart. Thermocouples 2 and 7 are disposed at the edge of the hot plate. Thermocouples 3 to 5 (and 8 to 10 similarly) are disposed in a line, respectively 4cms, 8cms and 12cms from the edge of the hot plate.

The results indicate that, using the mattress cover of the invention, the temperature rises more slowly, and even after 75 minutes, the temperature under the hot plate using the mattress cover of the invention is significantly lower than that of the PVC control.

### EXAMPLE 2

A second spacer fabric for a material in accordance with the invention is knitted on a RD6N machine using two needle bars and six guide bars. The sequence of operation is as follows:

| | |
|---|---|
| GUIDE BAR 1 | 2-0-2-2/2-4-2-2/2-0-2-2/2-4-6-6/6-8-6-6/ 6-4-6-6/6-8-6-6/6-4-2-2// |
| GUIDE BAR 2 | 6-8-6-6/6-4-6-6/6-8-6-6/6-4-2-2/2-0-2-2/ 2-4-2-2/2-0-2-2/2-4-6-6// |
| GUIDE BAR 3 | 8-8-4-4/2-2-4-4/8-8-4-4/0-0-4-4/6-6-4-4/0-0-4-4-/6-6-4-4/0-0-4-4// |
| GUIDE BAR 4 | 0-2/4-6/8-10/4-6// |
| GUIDE BAR 5 | 0-0-0-2/4-4-2-0// |
| GUIDE BAR 6 | 2-2-6-8/6-6-2-0//. |

The construction notation is given in steps of 2 i.e. 0-2-4-6-8, where each number represents a movement (or non-movement of the guide bar over one needle space).

In a preferred embodiment, the yarn dTEX (thickness) is as follows:
Bars 1 and 2 - 55 dTEX polyester
Bars 3 and 4 - 69 dTEX polyester
Bar 5 & 6 - 50 dTEX polyester

An embodiment of a spacer material according to the invention is illustrated in the accompanying Drawings in which:
Figure 1 shows the upper surface of a portion of the spacer material in plan view; and
Figure 2 shows a sectional side elevation of the spacer material of Figure 1.

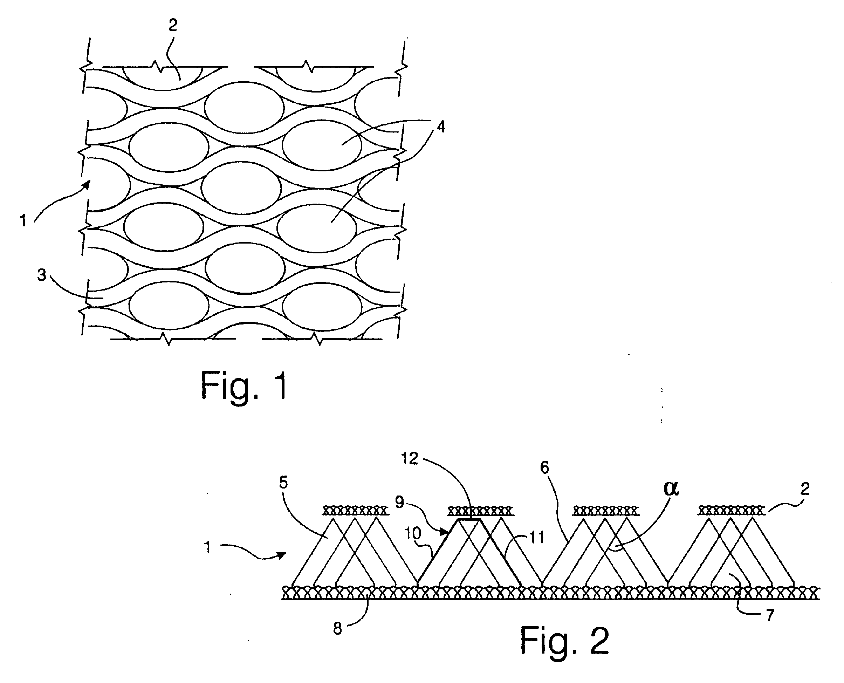

Referring to the Drawings, the spacer fabric illustrated generally at 1 has an upper surface 2 comprising a warp knitted multifilament mesh having strands 3 of width 2mm with holes 4 of diameter 2mm. In Figure 2, there is also shown the spacer layer 5, having monofilament polyester spacer threads 6, disposed in generally V-shaped groups 7, with an acute angle, as illustrated, between threads of opposed inclination. The lower surface 8 of the spacer fabric 1 is knitted from multifilament polyester threads to form a substantially dimensionally stable layer. Individual spacer linking threads such as 9, illustrated as a thicker line, have sections 10,11, angled in opposed directions, and a horizontal midsection 12 which is inlaid in the upper surface layer 2.

## Claims

1. A flexible spacer fabric (1), the fabric having a liquid permeable and breathable upper surface layer (2), a heat and liquid dissipating spacer layer (5) and a lower surface layer (8), wherein the upper surface layer is a warp knitted mesh of multifilament synthetic fibre yarns and the lower surface layer is dimensionally stable such that it retains its integrity after washing and crumpling, **characterised in that** said multifilament synthetic fibre yarns of the upper surface layer include inherently wicking fibres having enhanced capillary action by virtue of at least one longitudinal channel which permits faster liquid transport by capillary action.

2. A fabric according to Claim 1, wherein the knitted mesh has hexagonal holes.

3. A fabric according to Claim 1 or 2, wherein the mesh has an average hole diameter of from 1.0 - 3.0 mm.

4. A fabric according to any of the preceding claims, in which the average width of the mesh strands (3) in the upper surface layer is 0.5 - 3.0 mm.

5. A fabric according to any of the preceding claims, in which the ratio of the average hole diameter to the average width of the mesh strands in the upper surface layer (2) is from 3:1 to 1:2.

6. A fabric according to any of the preceding claims, in which the upper surface layer (2) is such that liquids of viscosity of at least 30 dynes per cm can pass through the upper surface and into the spacer layer without lying on the surface.

7. A fabric according to any of the preceding claims, in which the upper surface of the fabric has a grade of less than 1 when tested in accordance with the Oil Repellency Rating AATCC Method.

8. A fabric according to any of the preceding claims, which has a value of less than 2.0 mm H2O when tested in accordance with BS4578:1970 (1991).

9. A fabric according to any of the preceding claims, wherein the upper surface layer (2) comprises a warp knitted mesh of multifilament yarns (3).

10. A fabric according to Claim 9, wherein the multifilament yarn (3) is a polyester.

11. A fabric according to Claim 9 or 10 wherein the multifilament yarn (3) has a dTEX of from 40 to 180.

12. A fabric according to any of the preceding claims, wherein the spacer layer (5) comprises linking threads (6, 9) of a monofilament and is free of multi filament linking threads.

13. A fabric according to Claim 12, wherein the number of monofilament linking threads (6, 9) in the spacer layer is from 100 to 400 threads per square cm.

14. A fabric according to Claim 12 or 13, wherein the monofilament linking threads (6, 9) in the spacer (5) layer are arranged such that each pair, or group, of threads is in the form of a V-shape.

15. A fabric according to Claim 14 wherein the angle of the V is from 5° to 55°.

16. A fabric according to Claim 14 or 15, wherein substantially 100% of the linking threads (6, 9) are arranged in V-shaped formations.

17. A fabric according to any one of claims 12 to 16, wherein individual linking threads (9) have sections (10, 11) angled in opposed directions and a midsection (12) which is inlaid in the upper surface layer (2).

18. A fabric according to any one of claims 12 to 17, wherein the monofilament linking threads (6, 9) have a dTEX of from 22 to 115.

19. A fabric according to any one of claims 12 to 18, wherein the monofilament linking threads (6, 9) comprise a polyester.

20. A fabric according to any one of claims 12 to 19, wherein the upper surface layer (2) has a construction wherein the monofilament linking threads (6, 9) of the spacer layer (5) are surrounded by softer multifilament yarns.

21. A fabric according to claim 20, wherein an open stitch has been applied to the multifilament yarns and a closed stitch has been applied to the monofilament linking threads.

22. A fabric according to any one of the preceding claims, wherein the spacer layer (5) requires a work of compression, as measured by BS4098:1975 of at least 60 J/metre².

23. A fabric according to any one of the preceding claims, which has a thickness recovery of at least 75%.

24. A fabric according to any one of the preceding claims, which has a compression recovery of at least 75%.

25. A fabric according to any one of the preceding claims, wherein in the spacer layer (5) the ratio of the volume of free space to the volume of linking threads is greater than 100.

26. A fabric according to any one of the preceding claims, wherein the dimensionally stable lower surface layer (8) is knitted with stitches having a plurality of loops.

27. A fabric according to any one of the preceding claims, wherein the lower surface layer (8) is a multifilament or spun-filament warp knitted fabric.

28. A fabric according to Claim 27, wherein the lower surface layer (8) comprises a multifilament yarn having a dTEX of from 40 to 230.

29. A fabric according to any one of the preceding claims, wherein the wickability of the fabric, when measured by a wickability test according to TTM1418:92 (FDC.348), is such that the wicked liquid rises to a height of at least 100 mm, when tested in both the warp and weft directions in the time of 30 minutes.

30. A mattress cover which comprises a flexible spacer fabric according to any one of claims 1 to 29, and a liquid impermeable lower surface layer.

31. A mattress cover according to Claim 30, wherein the liquid impermeable lower surface layer is laminated to the flexible spacer fabric.

32. A cot mattress comprising a foam plastic core or a spring mattress core and a cover comprising a flexible spacer fabric according to any one of claims 1 to 29, and arranged between the mattress core and the cover, a liquid impermeable layer.

33. A cot mattress according to claim 32, wherein the mattress core is provided with a liquid impermeable waterproof underlay, and the spacer fabric is formed into a removable mattress cover therefore.

34. A cot mattress according to Claim 32 or 33, wherein the mattress core comprises an open cell polymeric foam material.

## Patentansprüche

1. Flexibles Abstandstextil (1), das eine flüssigkeitsdurchlässige und atmungsaktive obere Oberflächenschicht (2), eine Wärme und Flüssigkeit ableitende Abstandsschicht (5) und eine untere Oberflächenschicht (8) aufweist, wobei die obere Oberflächenschicht ein kettengewirktes Maschenmaterial aus Multifilament-Synthetikfasergarnen ist und die untere Oberflächenschicht dimensionsbeständig ist, so dass sie nach dem Waschen und Knautschen ihre Beschaffenheit behält, **dadurch gekennzeichnet, dass** die Multifilament-Synthetikfasergarne der oberen Oberflächenschicht Fasern mit inhärenter Dochtwirkung enthalten, die auf Grund mindestens eines Längskanals, der einen schnelleren Flüssigkeitstransport durch Kapillarwirkung ermöglicht, eine verbesserte Kapillarwirkung haben.

2. Textil nach Anspruch 1, bei dem das gewirkte Maschenmaterial hexagonale Löcher aufweist.

3. Textil nach Anspruch 1 oder 2, bei dem das Maschenmaterial einen durchschnittlichen Lochdurchmesser von 1,0 bis 3,0 mm hat.

4. Textil nach einem der vorhergehenden Ansprüche, bei dem die durchschnittliche Breite der Maschenmaterialfäden (3) in der oberen Oberflächenschicht 0,5 bis 3,0 mm beträgt.

5. Textil nach einem der vorhergehenden Ansprüche, bei dem das Verhältnis des durchschnittlichen Lochdurchmessers zu der durchschnittlichen Breite der Maschenmaterialfäden in der oberen Oberflächenschicht (2) 3:1 bis 1:2 beträgt.

6. Textil nach einem der vorhergehenden Ansprüche, bei dem die obere Oberflächenschicht (2) so ausgebildet ist, dass Flüssigkeiten mit einer Viskosität von mindestens 30 Dyn/cm durch die obere Oberfläche hindurchtreten und in die Abstandsschicht gelangen können, ohne auf der Oberfläche zu liegen.

7. Textil nach einem der vorhergehenden Ansprüche, bei dem die obere Oberfläche des Textils bei Prüfung nach dem die Ölabstoßung bewertenden AATCC-Verfahren einen Grad von weniger als 1 hat.

8. Textil nach einem der vorhergehenden Ansprüche, das bei Prüfung nach BS4578:1970 (1991) einen Wert von weniger als 2,0 mm H2O hat.

9. Textil nach einem der vorhergehenden Ansprüche, bei dem die obere Oberflächenschicht (2) ein kettengewirktes Maschenmaterial aus Multifilament-Garnen (3) aufweist.

10. Textil nach Anspruch 9, bei dem das Multifilament-Garn (3) ein Polyester ist.

11. Textil nach Anspruch 9 oder 10, bei dem das Multifilament-Garn (3) einen dtex von 40 bis 180 hat.

12. Textil nach einem der vorhergehenden Ansprüche, bei dem die Abstandsschicht (5) Verbindungsfäden (6, 9) aus einem Monofilament aufweist und frei von Multifilament-Verbindungsfäden ist.

13. Textil nach Anspruch 12, bei dem die Anzahl von Monofilament-Verbindungsfäden (6, 9) in der Abstandsschicht 100 bis 400 Fäden pro Quadratzentimeter beträgt.

14. Textil nach Anspruch 12 oder 13, bei dem die Monofilament-Verbindungsfäden (6, 9) in der Abstandsschicht (5) so angeordnet sind, dass jedes Paar oder jede Gruppe von Fäden in der Form einer V-Form vorgesehen ist.

15. Textil nach Anspruch 14, bei dem der Winkel des V 5° bis 55° beträgt.

16. Textil nach Anspruch 14 oder 15, bei dem im Wesentlichen 100% der Verbindungsfäden (6, 9) in V-förmigen Anordnungen angeordnet sind.

17. Textil nach einem der Ansprüche 12 bis 16, bei dem einzelne Verbindungsfäden (9) Abschnitte (10, 11), die in entgegengesetzte Richtungen abgewinkelt sind, und einen Mittelabschnitt (12) aufweisen, der in die obere Oberflächenschicht (2) eingelegt ist.

18. Textil nach einem der Ansprüche 12 bis 17, bei dem die Monofilament-Verbindungsfäden (6, 9) ein dtex von 22 bis 115 haben.

19. Textil nach einem der Ansprüche 12 bis 18, bei dem die Monofilament-Verbindungsfäden (6, 9) einen Polyester aufweisen.

20. Textil nach einem der Ansprüche 12 bis 19, bei dem die obere Oberflächenschicht (2) einen Aufbau hat, bei dem die Monofilament-Verbindungsfäden (6, 9) der Abstandsschicht (5) von weicheren Multifilament-Garnen umgeben sind.

21. Textil nach Anspruch 20, bei dem auf die Multifilament-Garne ein offener Stich angewendet worden ist und auf die Monofilament-Verbindungsfäden ein geschlossener Stich angewendet worden ist.

22. Textil nach einem der vorhergehenden Ansprüche, bei dem die Abstandsschicht (5) eine Kompressionsarbeit, gemessen gemäß BS4098:1975, von mindestens 60 J/m² erfordert.

23. Textil nach einem der vorhergehenden Ansprüche, das ein Dickenrückstellvermögen von mindestens 75% aufweist.

24. Textil nach einem der vorhergehenden Ansprüche, das ein Kompressionsrückstellvermögen von mindestens 75% aufweist.

25. Textil nach einem der vorhergehenden Ansprüche, bei dem in der Abstandsschicht (5) das Verhältnis des Volumens von freiem Raum zu dem Volumen von Verbindungsfäden größer als 100 ist.

26. Textil nach einem der vorhergehenden Ansprüche, bei dem die dimensionsbeständige untere Oberflächenschicht (8) mit Stichen gewirkt ist, die eine Vielzahl von Schlaufen aufweisen.

27. Textil nach einem der vorhergehenden Ansprüche, bei dem die untere Oberflächenschicht (8) ein multifilamentförmiges oder gesponnenes kettengewirktes Textil ist.

28. Textil nach Anspruch 27, bei dem die untere Oberflächenschicht (8) ein Multifilament-Garn mit einem dtex von 40 bis 230 aufweist.

29. Textil nach einem der vorhergehenden Ansprüche, bei dem die Dochtwirkung des Textils, gemessen mit einem Dochtwirkungstest gemäß TTM1418:92 (FDC.348), derart ist, dass die durch Dochtwirkung hochgezogene Flüssigkeit auf eine Höhe von mindestens 100 mm ansteigt, wenn in der Zeit von 30 Minuten sowohl in Kett- als auch in Schussrichtung getestet wird.

30. Matratzenabdeckung, die ein flexibles Abstandstextil nach einem der Ansprüche 1 bis 29 und eine flüssigkeitsundurchlässige untere Oberflächenschicht aufweist.

31. Matratzenabdeckung nach Anspruch 30, bei der die flüssigkeitsundurchlässige untere Oberflächenschicht an das flexible Abstandstextil laminiert ist.

32. Bettmatratze, die einen Schaumstoffkern oder einen Federmatratzenkern und eine Abdeckung, die ein flexibles Abstandstextil nach einem der Ansprüche 1 bis 29 aufweist, und eine flüssigkeitsundurchlässige Schicht aufweist, die zwischen dem Matratzenkern und der Abdeckung angeordnet ist.

33. Bettmatratze nach Anspruch 32, bei der der Matratzenkern mit einer flüssigkeitsundurchlässigen, wasserdichten Unterlage ausgestattet ist und das Abstandstextil in eine entfernbare Matratzenabdeckung dafür ausgebildet ist.

34. Bettmatratze nach Anspruch 32 oder 33, bei der der Matratzenkern ein offenzelliges polymeres Schaumstoffmaterial aufweist.

## Revendications

1. - Toile d'espacement flexible (1), la toile ayant une couche de surface supérieure (2) perméable aux liquides et à l'air, une couche d'espacement (5) à dissipation de chaleur et de liquide et une couche de surface inférieure (8), dans laquelle la couche de surface supérieure est une maille à tricotage chaîne de fils de fibres synthétiques multifilaments et la couche de surface inférieure est dimensionnellement stable de telle sorte qu'elle conserve son intégrité après lavage et froissement, **caractérisée par le fait que** lesdits fils de fibres synthétiques multifilaments de la couche de surface supérieure comprennent des fibres à effet mèche par inhérence ayant une action capillaire améliorée en vertu d'au moins un canal longitudinal qui permet un transport de liquide plus rapide par action capillaire.

2. - Toile selon la revendication 1, dans laquelle la maille tricotée a des trous hexagonaux.

3. - Toile selon l'une des revendications 1 ou 2, dans laquelle la maille a un diamètre de trou moyen de 1,0-3,0 mm.

4. - Toile selon l'une quelconque des revendications précédentes, dans laquelle la largeur moyenne des brins de maille (3) dans la couche de surface supérieure est 0,5-3,0 mm.

5. - Toile selon l'une quelconque des revendications précédentes, dans laquelle le rapport du diamètre de trou moyen à la largeur moyenne des brins de maille dans la couche de surface supérieure (2) est de 3:1 à 1:2.

6. - Toile selon l'une quelconque des revendications précédentes, dans laquelle la couche de surface supérieure (2) est telle que des liquides d'une viscosité d'au moins 30 dynes par cm peuvent passer à travers la surface supérieure et dans la couche d'espacement sans s'étendre sur la surface.

7. - Toile selon l'une quelconque des revendications précédentes, dans laquelle la surface supérieure du tissu a une qualité de moins de 1 lorsqu'elle est testée conformément à la Méthode AATCC de Classement d'Oléorésistance « Oil Repellency Rating AATCC Method ».

8. - Toile selon l'une quelconque des revendications précédentes, qui a une valeur de moins de 2,0 mm H₂O lorsqu'elle est testée conformément à BS4578:1970 (1991).

9. - Toile selon l'une quelconque des revendications précédentes, dans laquelle la couche de surface supérieure (2) comprend une maille tricotée chaîne de fils multifilaments (3)

10. - Toile selon la revendication 9, dans laquelle le fil multifilaments (3) est un polyester.

11. - Toile selon l'une des revendications 9 ou 10, dans laquelle le fil multifilaments (3) a un dTEX de 40 à 180.

12. - Toile selon l'une quelconque des revendications précédentes, dans laquelle la couche d'espacement (5) comprend des fils de liaison (6,9) d'un monofilament et est exempte de fils de liaison multifilaments.

13. - Toile selon la revendication 12, dans laquelle le nombre de fils de liaison monofilaments (6,9) dans la couche d'espacement est de 100 à 400 fils par cm carré.

14. - Toile selon l'une des revendications 12 ou 13, dans laquelle les fils de liaison monofilaments (6,9) dans la couche d'espacement (5) sont arrangés de telle sorte que chaque paire, ou groupe, de fils est dans la forme d'un V.

15. - Toile selon la revendication 14, dans laquelle l'angle du V est de 5° à 55°.

16. - Toile selon l'une des revendications 14 ou 15, dans laquelle sensiblement 100% des fils de liaison (6,9) sont disposés en formations en V.

17. - Toile selon l'une quelconque des revendications 12 à 16, dans laquelle des fils de liaison individuels (9) ont des sections (10,11) inclinées dans des directions opposées et une section médiane (12) qui est incrustée dans la couche de surface supérieure (2).

18. - Toile selon l'une quelconque des revendications 12 à 17, dans laquelle les fils de liaison monofilaments (6,9) ont un dTEX de 22 à 115.

19. - Toile selon l'une quelconque des revendications 12 à 18, dans laquelle les fils de liaison monofilaments (6,9) comprennent un polyester.

20. - Toile selon l'une quelconque des revendications 12 à 19, dans laquelle la couche de surface supérieure (2) a une structure dans laquelle les fils de liaison monofilaments (6,9) de la couche d'espacement (5) sont entourés par des fils multifilaments plus souples.

21. - Toile selon la revendication 20, dans laquelle une maille ouverte a été appliquée aux fils multifilaments et une maille fermée a été appliquée aux fils de liaison monofilaments.

22. - Toile selon l'une quelconque des revendications précédentes, dans laquelle la couche d'espacement (5) nécessite un travail de compression, tel que mesuré par BS4098:1975 d'au moins 60 J/mètre².

23. - Toile selon l'une quelconque des revendications précédentes, qui a une récupération d'épaisseur d'au moins 75%.

24. - Toile selon l'une quelconque des revendications précédentes, qui a une récupération de compression d'au moins 75%.

25. - Toile selon l'une quelconque des revendications précédentes, dans laquelle, dans la couche d'espacement (5), le rapport du volume d'espace libre au volume de fils de liaison est supérieur à 100.

26. - Toile selon l'une quelconque des revendications précédentes, dans laquelle la couche de surface inférieure (8) dimensionnellement stable est tricotée avec des mailles ayant une pluralité de boucles.

27. - Toile selon l'une quelconque des revendications précédentes, dans laquelle la couche de surface inférieure (8) est un tissu à tricotage chaîne multifilaments ou à filaments filés.

28. - Toile selon la revendication 27, dans laquelle la couche de surface inférieure (8) comprend un fil multifilament ayant un dTEX de 40 à 230.

29. - Toile selon l'une quelconque des revendications précédentes, dans laquelle l'effet de mèche de la toile, lorsqu'il est mesuré par un test d'effet de mèche conformément à TTM1418:92 (FDC.348), est tel que le liquide de mèche s'élève jusqu'à une hauteur d'au moins 100 mm, lorsqu'il est testé à la fois dans les directions de la chaîne et de la trame, en un laps de temps de 30 minutes.

30. - Protège-matelas qui comprend une toile d'espacement flexible telle que définie à l'une quelconque des revendications 1 à 29, et une couche de surface inférieure imperméable aux liquides.

31. - Protège-matelas selon la revendication 30, dans lequel la couche de surface inférieure imperméable aux liquides est laminée sur la toile d'espacement flexible.

32. - Matelas de couchette comprenant une âme en matière plastique mousse ou une âme de matelas à ressorts et un protège-matelas comprenant une toile d'espacement flexible telle que définie à l'une quelconque des revendications 1 à 29, et, disposée entre l'âme de matelas et le protège-matelas, une couche imperméable aux liquides.

33. - Matelas de couchette selon la revendication 32, dans lequel l'âme de matelas est dotée d'une sous-couche imperméable à l'eau, imperméable aux liquides, et la toile d'espacement est formée suivant un protège-matelas amovible pour celle-ci.

34. - Matelas de couchette selon l'une des revendications 32 ou 33, dans lequel l'âme de matelas comprend une matière en mousse de polymère à cellules ouvertes.
